# EUROPÄISCHE PATENTSCHRIFT

(11) **EP 2 046 113 B1**
(45) Veröffentlichungstag und Bekanntmachung des Hinweises auf die Patenterteilung: **07.10.2009**
(21) Anmeldenummer: 07784597.2
(22) Anmeldetag: 26.07.2007
(51) Int. Cl.: A01K 13/00

(54) **SCHUTZBEKLEIDUNG FÜR TIERE**
PROTECTIVE CLOTHING FOR ANIMALS
VÊTEMENT DE PROTECTION POUR ANIMAUX

(30) Priorität: 04.08.2006 AT 5902006 U
(43) Veröffentlichungstag der Anmeldung: 15.04.2009
(73) Patentinhaber: FREITAG, Norbert, 6973 Höchst (AT)
(72) Erfinder: FREITAG, Norbert, 6973 Höchst (AT)
(74) Vertreter: Hofmann, Ralf U.
(86) Internationale Anmeldenummer: PCT/AT2007/000368
(87) Internationale Veröffentlichungsnummer: WO 2008/014530

(56) Entgegenhaltungen:
- CA-A1- 2 319 885
- US-A- 3 141 443
- US-B1- 6 481 383

## Beschreibung

Die Erfindung betrifft eine Schutzbekleidung für Tiere aus einem elastischen, textilen Gewebe, Gewirke oder Gestricke, wobei einzelne Abschnitte oder Randbereiche derselben fest, jedoch lösbar miteinander verbunden sind.

Schutzbekleidungen diverser Ausführungen sind bekannt geworden, wobei einzelne Abschnitte über Klettverschlüsse (US2004/0031448 A1 oder US6,234,117 B1), Riemen (US6,880,489 B2 oder DE20311220 U1) oder die Schutzbekleidung durchdringende Nieten (US3,141,443 A) miteinander verbunden sind. Dabei ist immer eine Vorfertigung auf verschiedene Größen und Zuschnitte erforderlich. Eine individuelle Anpassung ist in der Regel nicht möglich.

Die vorliegende Erfindung hat sich daher zur Aufgabe gestellt, eine besondere Art der Verbindung zwischen einzelnen Abschnitten der Schutzbekleidung oder Randbereichen derselben zu schaffen, mit der eine optimale Anpassung an diverse Körperformen und - größen der Tierkörper möglich ist, ohne dass dabei eine Beeinträchtigung der Haut bzw. des Felles eines Tieres gegeben ist.

Dies gelingt erfindungsgemäß dadurch, dass aneinander anschließende Abschnitte oder Randbereiche des Gewebes, Gewirkes oder Gestrickes einander überlappend angeordnet sind und mittels zweiteiliger Druckknopfelemente miteinander verbunden sind, wobei die aneinander anschließenden und einander überlappenden Abschnitte oder Randbereiche zwischen den beiden Teilen der Druckknopfelemente liegend im Bereich des Druckknopfelementes zerstörungsfrei an die ineinander steckbaren Teile des Druckknopfelementes angeformt sind.

Dadurch kann die Verbindung aneinander anschließender Abschnitte oder Randbereiche derselben an beliebigen Stellen, also an bestzugänglichen Stellen erfolgen. Es ist auch keinerlei Beschädigung der Abschnitte gegeben, da die miteinander zu verbindenden Abschnitte oder Randbereiche gemeinsam und zerstörungsfrei an die ineinander steckbaren Teile des Druckknopfelementes angeformt werden. Nach dem Entfernen der Druckknopfelemente gehen die Abschnitte oder deren Randbereiche in die ursprüngliche ebene Ausgangslage zurück.

Druckknöpfe werden üblicherweise an den Innenseiten der miteinander zu verbindenden Abschnitte oder Randbereiche derselben angenäht oder sonst wie befestigt und kommen daher direkt miteinander in Wirkverbindung. Bei der Ausgestaltung nach der vorliegenden Erfindung hingegen werden die beiden Teile des Druckknopfelementes von den Außenoberflächen der Abschnitte oder der Randbereiche derselben herangeführt und unter Einschluss der Abschnitte ineinander geführt. Daher können die Teile der Druckknopfelemente auch ohne der sonst üblichen Befestigung an den Abschnitten. Im unmittelbaren Bereich der Druckknopfelemente wird damit wohl die Elastizität des Abschnittes bzw. des Randbereiches desselben unterbunden, es wird jedoch nie das Gewebe, Gewirke oder Gestricke durchtrennt oder sonst wie beschädigt. Die Verbindung über diese Druckknopfelemente ist dabei so gut, dass die Tiere diese Verbindungen nicht selbst lösen können.

Ferner wird vorgeschlagen, dass die aneinander anschließenden Abschnitte oder Randbereiche des Gewebes, Gewirkes oder Gestrickes aufeinander abgestimmt zugeschnitten sind, um eine ausreichende Überlappung und somit das Ansetzen der Druckknopfelemente zu gewährleisten. Es ist also immer ein individueller Zuschnitt möglich, je nach dem, ob alle Körperteile des Tieres oder nur einzelne Gliedmaßen einzukleiden sind.

Eine besondere Ausgestaltung für das Einkleiden des Tierkörpers selbst ist auf die erfindungsgemäße Art dann gegeben, wenn ein einen Tierkörper umfassender Grundabschnitt an zwei einander zugeordneten Randbereichen über Druckknopfelemente zusammen gehalten ist.

Bei einem Einsatz der Schutzbekleidung für bestimmte Tierarten und -größen ist auch eine gewisse Vorfertigung möglich, indem aus dem Grundabschnitt Schlitze oder Löcher herausgeschnitten oder-gestanzt sind zum Hindurchführen der Beine, des Schwanzes, des Penis usw. Je nach Bedarf kann so eine Vorfertigung erfolgen, wobei aber immer noch eine zusätzliche Anpassung durch Zuschneiden erfolgen kann.

Eine vorteilhafte Ausgestaltung sieht vor, dass an die Löcher strumpfartige Abschnitte für die Beine und/oder den Schwanz eines Tieres ansetzbar sind, welche an dem die Löcher begrenzenden Randbereich des Grundkörpers mittels Druckknopfelementen befestigt sind. In gleicher Weise sind also auch zusätzliche Abschnitte mit einem Grundabschnitt verbindbar.

In diesem Zusammenhang sieht eine Ausführungsvariante vor, dass die strumpfartigen Abschnitte aus ebenen Teilen gefertigt sind, welche an ihren gegenüberliegenden Randbereichen mittels Druckknopfelementen miteinander verbunden sind. Diese Abschnitte können daher ebenfalls als flächige Elemente gefertigt werden, da sie ja anschließend nach dem Umschließen der entsprechenden Gliedmaßen durch die Druckknopfelemente einen strumpfartigen Abschnitt bilden.

Bei einer anderen Ausführungsform wird vorgesehen, dass die strumpfartigen Abschnitte als solche einstückig gefertigt sind, welche an dem die Löcher begrenzenden Randbereich des Grundkörpers mittels Druckknopfelementen befestigt sind. Es ist dann lediglich noch eine Befestigung mit den Randbereichen der Löcher erforderlich, wobei auch hier wieder die Druckknopfelemente eingesetzt sind.

In diesem Zusammenhang ist es vorteilhaft, wenn die strumpfartigen Abschnitte wesentlich länger als üblicherweise notwendig ausgeführt sind, wobei für den Einsatz eine bei einem bestimmten Tier erforderliche Länge abgeschnitten wird. Dabei ist es auch möglich, diese strumpfartigen Abschnitte länger zu belassen und z.B. im Fußbereich des Tieres den vorstehenden Bereich zuzuknöpfen oder umzulegen, damit auch der Fußbereich mit der Schutzbekleidung umfasst werden kann.

Eine weitere Ausgestaltung ergibt sich dann, wenn die strumpfartigen Abschnitte konisch rohrförmig ausgebildet sind, also an ihren beiden Enden unterschiedliche Durchmesser aufweisen. Dies ist besonders bei Gliedmaßen mit sehr unterschiedlichen Abmessungen von Vorteil. Es ist dabei auch möglich, dass ein spezieller Zwischenabschnitt herausgeschnitten wird, der dann gerade für dieses spezielle Tier passend ist.

Im Rahmen der Erfindung ist es aber auch möglich, dass die strumpfartigen Abschnitte zylindrisch rohrförmig ausgebildet sind. Durch die Elastizität des eingesetzten Gewebes, Gewirkes oder Gestrickes können entsprechend große Durchmesserunterschiede bei den Gliedmaßen eines Tieres überbrückt werden.

Besonders vorteilhaft wirkt sich aus, wenn alle Abschnitte aus einem nach allen Richtungen elastischen, textilen Gewebe, Gewirke oder Gestricke gebildet sind. Somit ist immer eine gute Anpassung an alle Oberflächen eines Tierkörpers gewährleistet. Insbesondere entstehen daher keine Druckstellen. Selbst die bei aufgebrachten Wundverbänden sich ergebenden Erhebungen sind auf diese Weise problemlos mit abzudecken, so dass außerdem ein sanfter Druck ausgeübt wird, damit der Verband nicht verrutschen kann. Außerdem können auf die erfindungsgemäße Art und Weise Wundverbände, Wundauflagen od.dgl. mit dem elastischen textilen Gewebe, Gewirke oder Gestricke verbunden und somit verrutschsicher gehalten werden.

Eine besonders vorteilhafte Ausgestaltung der Schutzbekleidung ist dann gegeben, wenn alle oder einzelne Abschnitte aus einem laufmaschenfreien, nach allen Richtungen elastischen, textilen Gewebe, Gewirke oder Gestricke gebildet sind. Gerade dadurch ist es möglich, dass an beliebigen Stellen der Randbereich eines Abschnittes zugeschnitten wird oder dass an den gewünschten Stellen ein Loch aus dem vollen Abschnitt herausgeschnitten wird. Der Aufbau des elastischen, textilen Gewebes, Gewirkes oder Gestrickes ist also mitentscheidend für eine optimale Gestaltung der erfindungsgemäßen Schutzbekleidung.

Ferner wird vorgeschlagen, dass die Druckknopfelemente aus Kunststoff gefertigt sind. Obwohl auch Metallausführungen denkbar sind, wird sich die Ausgestaltung aus Kunststoff als wohl hautfreundlicher für die Tiere erweisen. Dabei ist es vorteilhaft, wenn die Druckknopfelemente aus einem elastischen Kunststoff gefertigt sind. Es ist somit auch der unmittelbare Bereich der Verbindung entsprechend nachgiebig, damit Belastungen der Körperoberfläche des Tieres verhindert werden können.

Eine weitere Ausgestaltung sieht vor, dass die Druckknopfelemente an ihren tellerartigen Innenflächen mit einem Klebstoff beschichtet sind oder eine selbstklebende Folie tragen. Dadurch können die Teile der Druckknopfelemente beispielsweise nach dem ersten Verbinden in ihrer Position bleiben. Dies ist eventuell dann sinnvoll, wenn ein mehrfaches Lösen und Wiederbefestigen notwendig ist, beispielsweise bei einer ständig zu wiederholenden Wundbehandlung. Dabei ist es denkbar, dass die Druckknopfelemente an ihren tellerartigen Innenflächen eine doppelseitig selbstklebende Folie tragen. Die Druckknopfelemente können also unmittelbar vor dem ersten Einsatz für eine mehrfache Verwendung vorbereitet werden. Dabei ist es auch möglich, eine die Klebestelle abdeckende Folie vorzusehen, die dann vor dem ersten Einsatz - falls eine Festkleben erwünscht ist - abgezogen werden kann.

Weiter erfindungsgemäße Merkmale und besondere Vorteile werden in der nachstehenden Beschreibung anhand der Zeichnungen noch näher erläutert. Es zeigen:
- Fig. 1: eine Seitenansicht eines Hundes mit einer den Körper abdeckenden Schutzberkleidung;
- Fig. 2: eine Darstellung der Verbindung des Randbereiches eines Abschnittes der Schutzbekleidung kurz vor dem Zusammendrücken der zwei Teile des Druckknopfelementes;
- Fig. 3: eine Ansicht eines Hundes von hinten mit an der Rückseite erfolgter Verbindung der Randbereiche;
- Fig. 4: schematisch dargestellt die Verbindung von zwei Randbereichen eines Abschnittes;
- Fig. 5: eine Ansicht eines Hundes von hinten mit der Darstellung mehrerer Verbindungs- möglichkeiten der Schutzbekleidung;
- Fig. 6: eine Seitenansicht eines Hundes mit einer Schutzbekleidung;
- Fig. 7: eine Draufsicht auf den Hund;
- Fig. 8: eine Ansicht des Hundes von unten;
- Fig. 9: eine Seitenansicht eines Hundes mit einer Schutzbekleidung für ein Bein;
- Fig. 10: eine schematische Darstellung eines für die Schutzbekleidung eines Beines bei großen Tieren, z.B. Pferden einsetzbaren strumpfartigen Abschnittes;
- Fig. 11: den Einsatz eines Abschnittes gemäß Fig. 10 bei einem Pferd;
- Fig. 12: die Ausbildung eines Grundabschnittes als Abschwitzdecke bei Pferden;
- Fig. 13: die Ausbildung eines strumpfartigen Abschnittes für den Wadenbereich eines Pferdes.

Bei der erfindungsgemäßen Schutzbekleidung für Tiere soll insbesondere ein Schutz nach Operationen oder bei sonstiger erforderlicher Bedeckung von Körperteilen geschaffen werden können. Diese Schutzbekleidung ist eigentlich für alle Arten und Größen von Tieren einsetzbar, wobei natürlich auf die anatomischen Gegebenheiten Rücksicht zu nehmen ist. In der nachstehenden Beschreibung wird auf Hunde Bezug genommen. In gleicher Weise kann eine solche Schutzbekleidung aber auch für Katzen oder für noch kleinere Tiere, wie Ratten, Mäuse, Kaninchen, Meerschweinchen, Frettchen, Vögel, Fische oder ähnliche, jedoch auch für größere Tiere bis hin zum Pferd o. dgl. eingesetzt werden.

Diese Schutzbekleidung für Tiere besteht aus einem elastischen, textilen Gewebe, Gewirke oder Gestricke, wobei einzelne Abschnitte oder Randbereiche derselben fest, jedoch lösbar miteinander verbunden sind. Bei der erfindungsgemäßen Ausgestaltung sind aneinander anschließende Abschnitte 2 oder Randbereiche 3, 4 des Gewebes, Gewirkes oder Gestrickes einander überlappend angeordnet und mittels zweiteiliger Druckknopfelemente 1 miteinander verbunden. Falls möglich, wird darauf geachtet, dass an der Außenseite der Abschnitte der feinere Ripp und körperseitig der breitere Ripp angeordnet ist, so dass auf der Körperseite die Feuchtigkeit besser angesaugt werden kann und auf der Außenseite eine bessere Abgabe der Feuchtigkeit an die Luft ermöglicht wird. Die aneinander anschließenden und einander überlappenden Abschnitte 2 oder Randbereiche 3, 4 sind dabei zwischen den beiden Teilen 5, 6 der Druckknopfelemente 1 liegend im Bereich des Druckknopfelementes 1 zerstörungsfrei an die ineinander steckbaren Teile 5, 6 des Druckknopfelementes 1 angeformt.

Die aneinander anschließenden Abschnitte 2 oder Randbereiche 3, 4 des Gewebes, Gewirkes oder Gestrickes sind aufeinander abgestimmt zugeschnitten, um eine ausreichende Überlappung und somit das Ansetzen der Druckknopfelemente 1 zu gewährleisten. Einzelne Abschnitte können aber auch einstückig rohrförmig oder strumpfartig ausgeführt sein, wie noch näher erläutert wird. Die Verbindung über die Druckknopfelemente kann entweder wie dargestellt im Bauchbereich des Tierkörpers 7 erfolgen oder aber am Rückenbereich oder auch an einem oder an beiden Seitenbereichen des Tierkörpers 7.

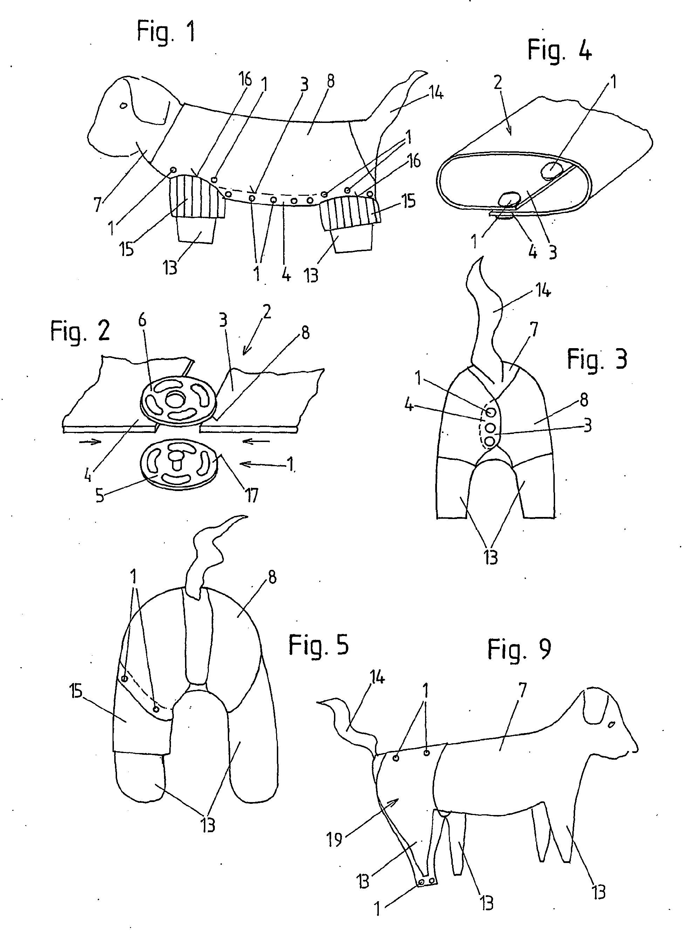

Gemäß den Fig. 1 und 6 bis 7 ist die Schutzbekleidung von einem den Tierkörper 7 umfassender Grundabschnitt 8 gebildet, der an zwei einander zugeordneten Randbereichen 3, 4 über Druckknopfelemente 1 zusammen gehalten ist. Aus dem Grundabschnitt 8 sind Schlitze 9 oder Löcher 10 bis 12 herausgeschnitten oder -gestanzt zum Hindurchführen der Beine 13, des Schwanzes 14, des Penis usw.

Wie den Fig. 1 und 5 entnommen werden kann, sind an die Löcher 10, 11 strumpfartige Abschnitte 15 für die Beine 13 und/oder den Schwanz 14 eines Tieres ansetzbar. Diese strumpfartigen Abschnitte 15 sind an dem die Löcher 10, 11 begrenzenden Randbereich 16 des Grundkörpers 8 mittels Druckknopfelementen 1 befestigt. Beim konkreten Beispiel ist also der Grundkörper 8 aus einem ebenen Abschnitt gebildet, der an seinen Randbereichen 3, 4 mittels der Druckknopfelemente 1 zu einem strumpf- oder schlauchartigen Abschnitt verbunden ist. An die Löcher 10, 11 schließen dann wieder strumpfartige oder schlauchartige Abschnitte 15 an, die wiederum über die Druckknopfelemente 1 verbunden sind. Eine solche Ausbildung ist insbesondere auch bei Scheinschwangerschaften bei den Tieren erfolgreich einsetzbar. Die Abschnitte 15 bilden eine Art Shorts zu dem Grundabschnitt 8.

Die strumpfartigen Abschnitte 15 können aus ebenen Teilen gefertigt sein, welche an ihren gegenüberliegenden Randbereichen mittels Druckknopfelementen 1 miteinander verbunden sind. Erst nach der Verbindung durch die Druckknopfelemente entstehen also die strumpfartigen oder schlauchartigen Abschnitte 15.

Es ist aber auch möglich, die strumpfartigen Abschnitte 15 als solche einstückig zu fertigen und dann diese Abschnitte 15 an dem die Löcher 10, 11 begrenzenden Randbereich des Grundkörpers 8 mittels Druckknopfelementen 1 zu befestigen. In besonders vorteilhafter Weise sind die strumpfartigen Abschnitte 15 wesentlich länger als üblicherweise notwendig ausgeführt, wobei dann für den Einsatz eine bei einem bestimmten Tier erforderliche Länge abgeschnitten wird.

Eine andere Ausführungsform sieht vor, die strumpfartigen Abschnitte 15 konisch rohrförmig auszubilden, so dass diese also an ihren beiden Enden unterschiedliche Durchmesser aufweisen. Es ist aber auch denkbar, die strumpfartigen Abschnitte 15 zylindrisch rohrförmig auszubilden.

Besonders wesentlich für einen wirkungsvollen Einsatz der Schutzbekleidung ist, dass alle Abschnitte 2,15 usw. aus einem nach allen Richtungen elastischen, textilen Gewebe, Gewirke oder Gestricke gebildet sind. Dabei ist insbesondere dann, wenn an beliebigen gewünschten Bereichen eines Abschnittes Löcher oder Schlitze geschnitten werden, von besonderer Bedeutung, alle oder einzelne Abschnitte 1, 15 aus einem laufmaschenfreien, nach allen Richtungen elastischen, textilen Gewebe, Gewirke oder Gestricke gebildet sind. Auch wenn von Hand nachträglich Löcher geschnitten werden, führt dies nicht zu einer wesentlichen Verletzung der Abschnitte, weil keine Laufmaschen die Stabilität des Gewebes, Gewirkes oder Gestrickes vermindern. Gerade durch die besondere Art des Gewebes, Gewirkes oder Gestrickes wird eine sichere Halterung samt Anpressung für Verbandsmaterial, aber auch eine optimale Fixierung von Sonden von einzusetzenden EKG-Geräten erreicht. Dabei kann die Verbindung zwischen Verbandmaterial oder Sonden mit dem elastischen Gewebe, Gewirke oder Getricke ebenfalls mittels der Druckknopfelemente erfolgen.

Die Druckknopfelemente 1 sind vorteilhaft aus Kunststoff gefertigt sind. Es kann dadurch auch nicht aufgrund des Körperschweißes zu einem Rosten kommen oder es sind einfach keine zusätzlichen, harten Stellen bei der Schutzbekleidung gegeben. In diesem Zusammenhang ist es zweckmäßig, wenn die Druckknopfelemente 1 aus einem elastischen Kunststoff gefertigt sind. Da eine zweifache Lage von Randbereichen 3, 4 eines Abschnittes 2 zwischen die beiden Teile 5, 6 der Druckknopfelemente eingeformt und eingeklemmt werden muss und diese Verbindung auch entsprechende Belastungen aushalten muss, erweist sich der Einsatz von Kunststoff mit entsprechender Elastizität vorteilhafter als der Einsatz von Metallen. Es können daher auch Toleranzen im Bereich der beiden Teile 5, 6 der Druckknopfelemente 1 weit besser ausgeglichen werden.

Wenn die Druckknopfelemente 1 mehrfach gelöst und an der gleichen Stelle wieder einzusetzen sind, können die Teile 5 und 6 auch mit der Oberfläche des betreffenden Abschnittes 2, 8 der Schutzbekleidung verbunden werden. Dazu kann vorgesehen werden, dass die Druckknopfelemente 1 an ihren tellerartigen Innenflächen 17 und 18 mit einem Klebstoff beschichtet sind oder eine selbstklebende Folie tragen. Beim Einsatz einer selbstklebenden Folie kann auch eine doppelseitig selbstklebende Folie eingesetzt werden, welche gegebenenfalls eine die Klebefläche abdeckende Schutzfolie aufweist, die dann bei Bedarf abgezogen werden kann. In diesem Zusammenhang ist es auch denkbar, im Bereich eines oder beider Teile 5, 6 des Druckknopfelementes 1 einen bei Druck platzenden Klebstofftropfen anzubringen, damit der eine oder beide Teile 5, 6 an einer entsprechenden Oberfläche verklebt werden können. Klebeverträgliche Stellen sind dabei an Hornhautstellen, an Hörnern, an Hufen usw. vorgesehen.

Bei der Darstellung nach Fig. 3 ist ersichtlich, dass auch an der Rückseite des Tierkörpers ein Grundabschnitt 8 an einander überlappenden Bereichen 3, 4 mittels Druckknopfelementen 1 fest, jedoch lösbar verbunden werden kann.

Fig. 4 zeigt schematisch auf, dass aus einem ebenen Abschnitt 2 und mit entsprechender Überlappung eine Verbindung mittels einer entsprechenden Anzahl von Druckknopfelementen 1 zu einem strumpf- oder schlauchartigen Abschnitt geschaffen werden kann.

Im Rahmend der Erfindung sind natürlich auch noch andere ebene Abschnitte oder strumpfartige Abschnitte einsetzbar, so beispielsweise als Ohrenschutz, als Venenschutz, als Maulkorb.

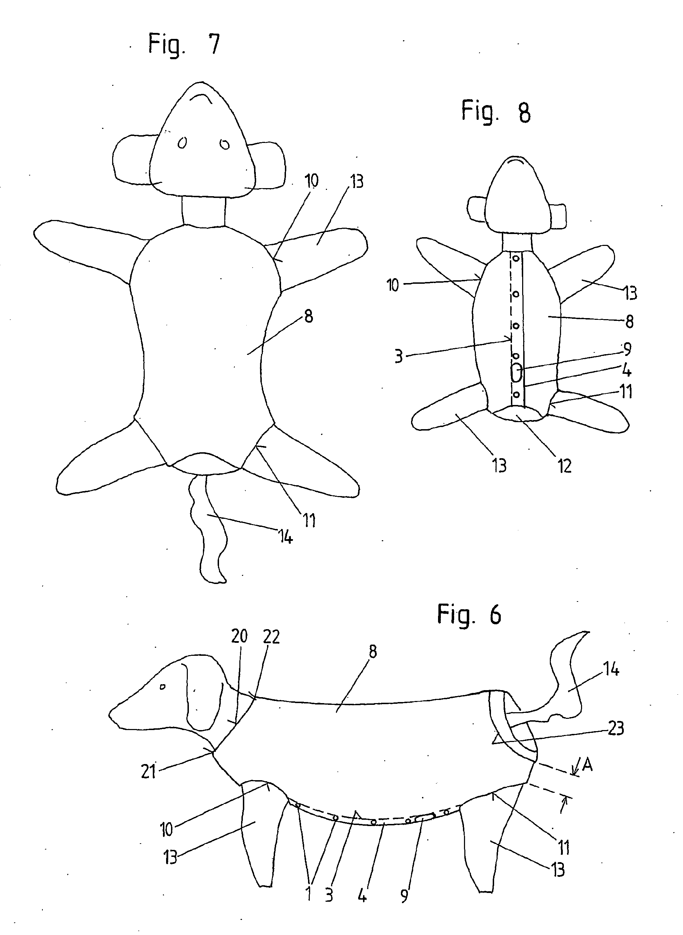

Bei der Ausgestaltung nach den Fig. 6 bis 8 kann vorgesehen werden, einen schlauchartigen Grundabschnitt 8 umfangsgeschlossen einstückig auszubilden. Es ist aber auch denkbar, diesen Grundabschnitt 8 als Flächenelement auszubilden und zur Bildung einer schlauchartigen Form an den zwei einander zugewandten Randbereichen 3, 4 mittels der Druckknopfelemente 1 zu verbinden. Auch hier ist natürlich die Stoßstelle zur gegenseitig überlappenden Anordnung entweder an der Unterseite, an der Oberseite oder an den Seitenbereichen des Tierkörpers 7 vorgesehen. Sollten an gewissen Stellen Nähte erforderlich sein, sind diese in vorteilhafter Weise als Stretch-Flachnähte ausgeführt.

Um eine gute Anpassung der Schutzbekleidung an die anatomischen Bedingungen des Hundes zu ermöglichen, kann der vordere Abschluss 20 des Grundabschnittes 8 spitzwinklig abgeschnitten sein, so dass also der unten liegende Abschnitt 21 weiter vorsteht als der oben liegende Abschnitt 22.

In diesem Zusammenhang ist es aber auch möglich, den schlauchartigen Grundabschnitt 8 an dessen oberem vorderen Abschluss in der Draufsicht im wesentlichen dreieckförmig zu verlängern, um mit dem dadurch gebildeten Lappen den Halsrücken des Hundes etwas abzudecken.

Der schlauchartige Grundabschnitt 8 kann an dessen seitlichen hinteren Abschlussbereichen 23 in Seitenansicht im Wesentlichen dreieckförmig verlängert sein. Es kann dadurch auch verhindert werden, dass der Abstand A zwischen den Löchern 11 und den hinteren Abschlussbereichen zu klein wird. Dadurch wird auch verhindert, dass dieser Bereich hinter den Beinen 13 zu schmal wird und dadurch eventuell fast schnurartig wird und möglicherweise einschneidet.

Eine besonders wirksame Maßnahme liegt darin, dass die Löcher 10, 11 für den Durchtritt der Füße 13 des Tieres im Wesentlichen ellipsenförmig ausgeführt sind. Dabei liegt eine speziell Ausführungsform darin, die Löcher 10, 11 für den Durchtritt der Füße 13 des Tieres im Wesentlichen ellipsenförmig auszuführen, wobei jedoch die an der Innenseite der Füße 13 zur Anlage kommenden Abschnitte der Löcher 10, 11 geradlinig verlaufen.

In Anpassung an die anatomischen Gegebenheiten kann noch vorgesehen werden, dass die Löcher 10 zum Durchtritt der Vorderfüße des Tieres einen kleineren Abstand voneinander aufweisen als die Löcher 11 zum Durchtritt der Hinterfüße des Tieres.

Eine weitere konstruktive Gestaltung sieht an der Unterseite des Grundabschnittes 8 eine zusätzlichen ovalen oder linsenförmigen Schlitz 9 zum Durchtritt des Penis männlicher Tiere vor. Hier kann auch ein Schlitz 9 zum Durchtritt des Gliedes männlicher Tiere nach Art eines Knopfloches vorbereitet sein, welches bei Bedarf zur Bildung eines echten Schlitzes 9 aufgeschnitten werden kann.

Gerade zum Einsatz bei Hündinnen ist eine Variante sinnvoll, bei der der hintere Endbereich des Grundabschnittes 8 zumindest teilweise durch verlängerte Lappen verschließbar ist.

Bei der Ausgestaltung nach Fig. 9 ist gezeigt, dass eine Schutzbekleidung auch für ein bestimmtes Glied eines Tieres einsetzbar ist. Es ist hier ein strumpfartiger Abschnitt 19 eingesetzt, der einen Fuß 13 des Hundes umschließt. Am freien Ende dieses Abschnittes 19 ist dieser beispielsweise durch einen angebrachten Knopf verschlossen oder aber durch den Einsatz von Druckknopfelementen 1. Hier kann am gegenüberliegenden Fuß eine Art schlauchartiger Abschnitt angesetzt werden, wobei dann diese beiden Abschnitte auf Höhe des Rückens des Tieres 7 miteinander wiederum durch Druckknopfelemente 1 miteinander verbunden werden können.

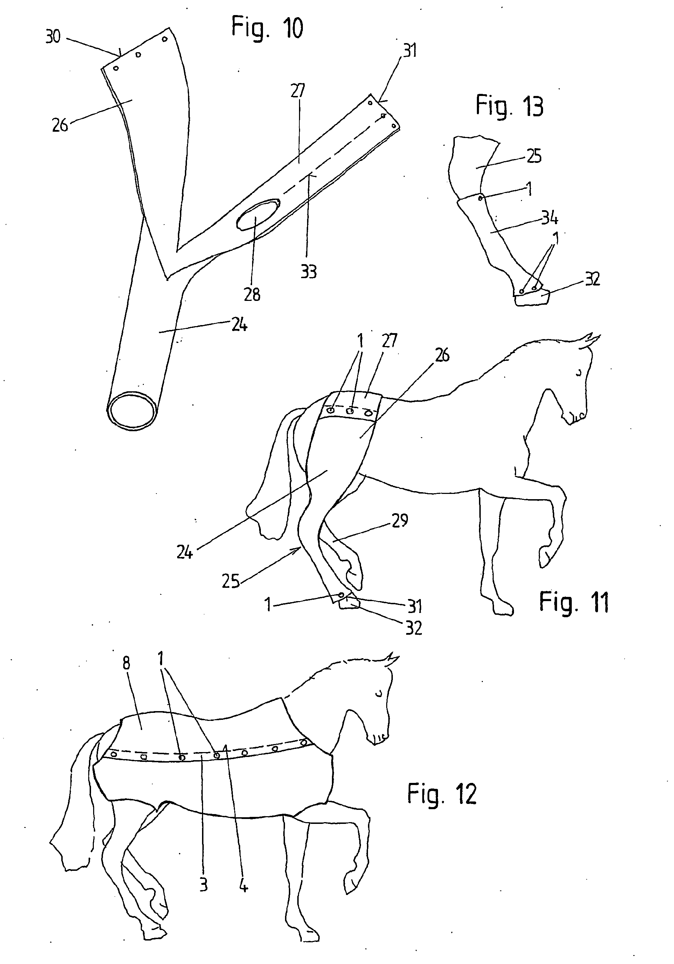

Bei der Ausgestaltung nach den Fig. 10 und 11 wird ein strumpfartiger Abschnitt 24 als Beinling bei großen Tieren, z.B. bei Pferden eingesetzt. Natürlich kann ein derartiger Abschnitt auch bei kleineren Tieren, z.B. bei Hunden oder Katzen verwendet werden. Dieser strumpfartige Abschnitt 24 wird auf die Länge, welche zum Abdecken eines Fußes 25 des Pferdes benötigt wird, in der Rohrform belassen. Der weitere Bereich wird in zwei Bereiche 26 und 27 mittig oder annähernd mittig aufgeschnitten, so dass sich zwei voneinander gelöste Bereiche 26 und 27 ergeben. In dem einen Bereich wird dann noch ein Loch 28 geschnitten, durch welches der gegenüberliegende Fuß 29 des Pferdes eingefädelt werden kann. Die beiden Enden 30 und 31 der Bereiche 26 und 27 werden einander überlappend an einem Seitenbereich des Pferdes über Druckknopfelemente 1 miteinander verbunden. Das untere Ende 31 des Abschnittes 24 wird mittels Druckknopfelementen 1, deren einer Teil am Huf 32 angeklebt wird, am Fuß 25 des Pferdes verbunden. Der Bereich 27 kann auch entlang der Linie 33 aufgeschnitten werden, wobei die beiden dadurch gebildeten Hälften auf gegenüber liegenden Seiten des Fußes 29 vorbei geführt werden, wobei dann wieder die Enden 31 und 32 einander überlappend verbunden werden. Es ist dabei durchaus möglich, dass der Bereich 27 länger ausgebildet ist als der Bereich 26. Insgesamt muss dabei der strumpfartige Abschnitt 24 eine entsprechende Gesamtlänge haben, wobei dann der eine oder der andere Bereich 26 oder 27 auf die notwendige Länge zugeschnitten wird.

Wie aus Fig. 12 ersichtlich ist, kann die erfindungsgemäße Anordnung mit einem über Druckknopfelemente 1 an den Randbereichen 3, 4 verbundenen Grundabschnitt 8 auch als Abschwitzdecke für Pferde eingesetzt werden, ohne dass dabei diese Decke verrutschen kann.

Eine weitere konstruktive Gestaltung ist der Fig. 13 zu entnehmen. Hier wird eine Art strumpfartiger Abschnitt 34 am Wadenbereich des Fußes 25 eines Pferdes angebracht. Das untere Ende dieses Abschnittes 34 kann am Huf 32 über ein angeklebtes Druckknopfelement 1 befestigt werden. Das obere Ende dieses Abschnittes kann ebenfalls über ein Druckknopfelement 1 befestigt werden, und zwar an einem hornartigen Fortsatz am Fuß 25 des Pferdes. Auch hier ist dieser Abschnitt 34 unverlierbar gehalten und kann so zur Abdeckung einer Wunde oder eines über eine Wunde gelegten Verbandes dienen.

Im Rahmen der Erfindung kann die Schutzbekleidung noch für weitere Zwecke herangezogen werden. Nicht nur die Farbgestaltung des Schutzelementes an sich kann sich mannigfach verändern und damit auch modischen Grundzügen angepasst werden, es sind auch durchaus verschiedene Designs denkbar. Es bestehen aber noch weitere Möglichkeiten, indem nämlich die Abschnitte 2, 8 und oder 15 vollflächig oder auf einem Teil der Oberfläche mit Werbebotschaften oder Logos bedruckt ist. Auch kann eine Möglichkeit vorgesehen werden, schriftliche Hinweise über die Art der Verletzung usw. anzubringen.

Die erfindungsgemäße Schutzbekleidung eignet sich in besonderem Maße für ein gutes Ausheilen von Operations- oder sonstigen Wunden bei Tieren aller Art oder auch bei notwendigem Abdecken bei Ausschlägen usw.

### Legende

### zu den Hinweisziffern:

- 1: Druckknopfelement
- 2: Abschnitt
- 3: Randbereich
- 4: Randbereich
- 5: Teil des Druckknopfelementes
- 6: Teil des Druckknopfelementes
- 7: Tierkörper
- 8: Grundabschnitt
- 9: Schlitz
- 10: Loch
- 11: Loch
- 12: Loch
- 13: Bein
- 14: Schwanz
- 15: strumpfartiger Abschnitt
- 16: Randbereich
- 17: Innenfläche
- 18: Innenfläche
- 19: strumpfartiger Abschnitt
- 20: Abschluss
- 21: unten liegender Abschnitt
- 22: oben liegender Abschnitt
- 23: hinterer Abschlussbereich.
- 24: Abschnitt
- 25: Fuß
- 26: Bereich
- 27: Bereich
- 28: Loch
- 29: Fuß
- 30: Ende
- 31: Ende
- 32: Huf
- 33: Linie
- 34: Abschnitt

## Patentansprüche

1. Schutzbekleidung für Tiere aus einem elastischen, textilen Gewebe, Gewirke oder Gestricke, wobei einzelne Abschnitte oder Randbereiche derselben fest, jedoch lösbar miteinander verbunden sind, **dadurch gekennzeichnet, dass** aneinander anschließende Abschnitte (2, 8, 15) oder Randbereiche (3, 4) des Gewebes, Gewirkes oder Gestrickes einander überlappend angeordnet sind und mittels zweiteiliger Druckknopfelemente (1) miteinander verbunden sind, wobei die aneinander anschließenden und einander überlappenden Abschnitte (2, 8, 15) oder Randbereiche (3,4) zwischen den beiden Teilen (5,6) der Druckknopfelemente (1) liegend im Bereich des Druckknopfelementes (1) zerstörungsfrei an die ineinander steckbaren Teile (5, 6) des Druckknopfelementes (1) angeformt sind.

2. Schutzbekleidung nach Anspruch 1, **dadurch gekennzeichnet, dass** die aneinander anschließenden Abschnitte (2, 8, 15) oder Randbereiche (3, 4) des Gewebes, Gewirkes oder Gestrickes aufeinander abgestimmt zugeschnitten sind, um eine ausreichende Überlappung und somit das Ansetzen der Druckknopfelemente (1) zu gewährleisten.

3. Schutzbekleidung nach Anspruch 1 oder 2, **dadurch gekennzeichnet, dass** ein einen Tierkörper (7) umfassender Grundabschnitt (8) an zwei einander zugeordneten Randbereichen (3, 4) über Druckknopfelemente (1) zusammen gehalten ist.

4. Schutzbekleidung nach Anspruch 3, **dadurch gekennzeichnet, dass** aus dem Grundabschnitt (8) Schlitze (9) oder Löcher (10, 11) herausgeschnitten oder -gestanzt sind zum Hindurchführen der Beine (13), des Schwanzes (14), des Penis usw.

5. Schutzbekleidung nach Anspruch 4, **dadurch gekennzeichnet, dass** an die Löcher (10, 11) strumpfartige Abschnitte (15) für die Beine (13) und/oder den Schwanz (14) eines Tieres (7) ansetzbar sind, welche an dem die Löcher (10, 11) begrenzenden Randbereich des Grundkörpers (8) mittels Druckknopfelementen (1) befestigt sind.

6. Schutzbekleidung nach Anspruch 5, **dadurch gekennzeichnet, dass** die strumpfartigen Abschnitte (15) aus ebenen Teilen gefertigt sind, welche an ihren gegenüberliegenden Randbereichen mittels Druckknopfelementen (1) miteinander verbunden sind.

7. Schutzbekleidung nach Anspruch 5, **dadurch gekennzeichnet, dass** die strumpfartigen Abschnitte (15) als solche einstückig gefertigt sind, welche an dem die Löcher (10, 11) begrenzenden Randbereich des Grundkörpers (8) mittels Druckknopfelementen (1) befestigt sind.

8. Schutzbekleidung nach einem der Ansprüche 5 bis 7, **dadurch gekennzeichnet, dass** die strumpfartigen Abschnitte (15) konisch rohrförmig ausgebildet sind, also an ihren beiden Enden unterschiedliche Durchmesser aufweisen.

9. Schutzbekleidung nach einem der Ansprüche 5 bis 7, **dadurch gekennzeichnet, dass** die strumpfartigen Abschnitte (15) zylindrisch rohrförmig ausgebildet sind.

10. Schutzbekleidung nach einem der Ansprüche 1 bis 9, **dadurch gekennzeichnet, dass** alle Abschnitte (2, 8, 15) aus einem nach allen Richtungen elastischen, textilen Gewebe, Gewirke oder Gestricke gebildet sind.

11. Schutzbekleidung nach einem der Ansprüche 1 bis 10, **dadurch gekennzeichnet, dass** alle oder einzelne Abschnitte (2, 8, 15) aus einem laufmaschenfreien, nach allen Richtungen elastischen, textilen Gewebe, Gewirke oder Gestricke gebildet sind.

12. Schutzbekleidung nach einem der Ansprüche 1 bis 12, **dadurch gekennzeichnet, dass** die Druckknopfelemente (1) aus Kunststoff gefertigt sind.

13. Schutzbekleidung nach Anspruch 12, **dadurch gekennzeichnet, dass** die Druckknopfelemente (1) aus einem elastischen Kunststoff gefertigt sind.

14. Schutzbekleidung nach einem der Ansprüche 1 bis 13, **dadurch gekennzeichnet, dass** die Druckknopfelemente (1) an ihren tellerartigen Innenflächen (17, 18) mit einem Klebstoff beschichtet sind oder eine selbstklebende Folie tragen.

15. Schutzbekleidung nach Anspruch 14, **dadurch gekennzeichnet, dass** die Druckknopfelemente (1) an ihren tellerartigen Innenflächen (17, 18) eine doppelseitig selbstklebende Folie tragen.

## Claims

1. Protective clothing for animals made of a resilient textile fabric, knitted fabric or meshed fabric, wherein individual portions or edge regions thereof are connected to one another in a secure yet detachable manner, **characterised in that** adjoining portions (2, 8, 15) or edge regions (3, 4) of the fabric, knitted fabric or meshed fabric are arranged overlapping one another and are connected to one another by means of two-part press fastener elements (1), wherein the adjoining and overlapping portions (2, 8, 15) or edge regions (3, 4) are, lying between the two parts (5, 6) of the press fastener elements (1), in the region of the press fastener element (1) moulded in a non-destructive manner onto the parts (5, 6) of the press fastener element (1) which can be fitted into one another.

2. Protective clothing according to claim 1, **characterised in that** the adjoining portions (2, 8, 15) or edge regions (3, 4) of the fabric, knitted fabric or meshed fabric are cut so that they match one another, in order to guarantee sufficient overlap and consequently the attachment of the press fastener elements (1).

3. Protective clothing according to claim 1 or 2, **characterised in that** a basic portion (8) embracing an animal body (7) is held together at two associated edge regions (3, 4) via press fastener elements (1).

4. Protective clothing according to claim 3, **characterised in that** slots (9) or holes (10, 11) are cut or stamped out of the basic portion (8) for passage of the legs (13), the tail (14), the penis etc.

5. Protective clothing according to claim 4, **characterised in that** stocking-like portions (15) for the legs (13) and/or the tail (14) of an animal (7) can be attached to the holes (10, 11), which portions (15) are secured by means of press fastener elements (1) to the edge region, bounding the holes (10, 11) of the basic body (8).

6. Protective clothing according to claim 5, **characterised in that** the stocking-like portions (15) are manufactured from plane parts connected to one another at their facing edge regions by means of press fastener elements (1).

7. Protective clothing according to claim 5, **characterised in that** the stocking-like portions (15) as such are manufactured in one piece and are secured to the edge region, bounding the holes (10, 11), of the base body (8) by means of press fastener elements (1).

8. Protective clothing according to any one of claims 5 to 7, **characterised in that** the stocking-like portions (15) are in the form of a tapered tube, therefore their two ends differ in diameter.

9. Protective clothing according to any one of claims 5 to 7, **characterised in that** the stocking-like portions (15) are cylindrically tubular.

10. Protective clothing according to any one of claims 1 to 9, **characterised in that** all portions (2, 8, 15) are formed from a textile fabric, knitted fabric or meshed fabric which is resilient in all directions.

11. Protective clothing according to any one of claims 1 to 10, **characterised in that** all or individual portions (2, 8, 15) are formed from a textile fabric, knitted fabric or meshed fabric which is resilient in all directions and non-run.

12. Protective clothing according to any one of claims 1 to 12, **characterised in that** the press fastener elements (1) are manufactured of a plastics material.

13. Protective clothing according to claim 12, **characterised in that** the press fastener elements (1) are manufactured from a resilient plastics material.

14. Protective clothing according to any one of claims 1 to 13, **characterised in that** at their plate-like inner surfaces (17, 18), the press fastener elements (1) are coated with an adhesive or bear a self-adhesive sheet.

15. Protective clothing according to claim 14, **characterised in that** the plate-like inner surfaces (17, 18) of the press fastener elements (1) bear a sheet which is self-adhesive on both sides.

## Revendications

1. Vêtement de protection pour animaux en textiles élastiques, en tissus, tissus à mailles ou tricots, et dont différents segments ou zones de bords sont reliés fermement mais de manière amovible,
**caractérisé en ce que**
des segments (2, 8, 15) adjacents ou des zones de bords (3, 4) du tissus, tissus à mailles ou tricots se chevauchent et sont reliés l'un à l'autre à
l'aide d'élément de boutons poussoirs (1) en deux parties,
les segments (2, 8, 15) ou zones de bords (3, 4) adjacents qui se chevauchent entre les deux parties (5, 6) des éléments de boutons-poussoirs (1) sont formés sans destruction dans la zone de l'élément de bouton-poussoir (1), sur les pièces (5, 6) qui s'engagent l'une dans l'autre de l'élément de bouton-poussoir (1).

2. Vêtement de protection selon la revendication 1,
**caractérisé en ce que**
les segments (2, 8, 15) ou zones de bords (3, 4) adjacents du tissu, tissu à mailles ou tricot sont découpés les uns en fonction des autres pour avoir un recouvrement suffisant et permettre ainsi le placement des éléments de boutons-poussoirs (1).

3. Vêtement de protection selon la revendication 1 ou 2,
**caractérisé en ce que**
un segment de base (8) entourant le corps de l'animal (7), est maintenu réuni à des éléments de boutons-poussoirs (1) dans deux zones de bords (3, 4), associées.

4. Vêtement de protection selon la revendication 3,
**caractérisé en ce que**
le segment de base (8) comporte des fentes (9) ou des trous (10, 11), découpés ou estompés pour le passage des jambes (13) de la queue (14) du pénis etc....

5. Vêtement de protection selon la revendication 4,
**caractérisé en ce que**
les segments (15) en forme de chaussettes sont rapportés sur les orifices (10, 11) pour les jambes (13) et/ou la queue (14) de l'animal (7), ces segments étant fixés à la zone de bord du corps de base (8) adjacente aux trous (10, 11) en étant fixés par l'intermédiaire d'éléments de boutons-poussoirs (1).

6. Vêtement de protection selon la revendication 5,
**caractérisé en ce que**
les segments en forme de chaussettes (15) sont réalisés à partir de pièces planes dont les zones de bords en regard sont reliées par des éléments de boutons-poussoirs (1).

7. Vêtement de protection selon la revendication 5,
**caractérisé en ce que**
les segments en forme de chaussettes (15) sont réalisés en une seule pièce fixée à la zone de bord délimitant les orifices (10, 11) de la pièce de base (8) par l'intermédiaire d'éléments de boutons-poussoirs (1).

8. Vêtement de protection selon l'une des revendications 5 à 7,
**caractérisé en ce que**
les segments (15) en forme de chaussettes sont tubulaires coniques dont les deux extrémités ont des diamètres différents.

9. Vêtement de protection selon l'une des revendications 5 à 7,
**caractérisé en ce que**
les segments (15) en forme de chaussettes sont tubulaires cylindriques.

10. Vêtement de protection selon l'une des revendications 1 à 9,
**caractérisé en ce que**
tous les segments (2, 8, 15) sont réalisés en des textiles tissés, à mailles ou tricotés, élastiques dans toutes les directions.

11. Vêtement de protection selon l'une des revendications 1 à 10,
**caractérisé en ce que**
tous les segments (2, 8, 15) sont réalisés sous forme de textiles tissés, à mailles ou tricotés, sans mailles courantes, et élastiques dans toutes les directions.

12. Vêtement de protection selon l'une des revendications 1 à 11,
**caractérisé en ce que**
les éléments de boutons poussoirs (1) sont en matière plastique.

13. Vêtement de protection selon la revendication 12,
**caractérisé en ce que**
les éléments de boutons poussoirs (1) sont en une matière plastique élastique.

14. Vêtement de protection selon l'une des revendications 1 à 13,
**caractérisé en ce que**
les éléments de boutons poussoirs (1) ont une surface intérieure (17, 18) en forme de coupelle munie d'une couche de colle ou portent un film autocollant.

15. Vêtement de protection selon la revendication 14,
**caractérisé en ce que**
au niveau de leurs surfaces intérieures (17, 18) en forme de coupelle, les éléments de boutons-poussoirs (1) portent un film autocollant ou un adhésif double face.
